(19) Europäisches Patentamt
European Patent Office
Office européen des brevets

(11) **EP 4 340 519 A1**

(12) **EUROPEAN PATENT APPLICATION**
published in accordance with Art. 153(4) EPC

(43) Date of publication:
**20.03.2024 Bulletin 2024/12**

(21) Application number: **21941824.1**

(22) Date of filing: **10.05.2021**

(51) International Patent Classification (IPC):
**H04W 74/08** (2024.01)

(52) Cooperative Patent Classification (CPC):
**H04W 74/08;** Y02D 30/70

(86) International application number:
**PCT/JP2021/017778**

(87) International publication number:
**WO 2022/239090 (17.11.2022 Gazette 2022/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NTT DOCOMO, INC.
Tokyo 100-6150 (JP)**

(72) Inventors:
• **SHIBAIKE, Naoya
  Tokyo 100-6150 (JP)**
• **HARADA, Hiroki
  Tokyo 100-6150 (JP)**
• **NAGATA, Satoshi
  Tokyo 100-6150 (JP)**

(74) Representative: **Hoffmann Eitle
Patent- und Rechtsanwälte PartmbB
Arabellastraße 30
81925 München (DE)**

(54) **TERMINAL AND COMMUNICATION METHOD**

(57)     A terminal includes a control unit that determines a physical random access channel (PRACH) slot and a random access radio network temporary identifier (RA-RNTI) that are to be used in a random access procedure; a transmitting unit that transmits a random access preamble in the determined PRACH slot; and a receiving unit that receives a random access response based on the determined RA-RNTI. The control unit sets a slot of a specific subcarrier spacing as a reference slot, and determines the PRACH slot to be used based on a number of PRACH slots included in the reference slot.

FIG.6

START

S1 DETERMINE PRACH SLOT, AND
CALCULATE RA-RNTI OR MSGB-RNTI

S2 TRANSMIT PREAMBLE OR MsgA IN DETERMINED PRACH SLOT

S3 RECEIVE RANDOM ACCESS RESPONSE OR MsgB
BASED ON CALCULATED RA-RNTI OR MSGB-RNTI

END

EP 4 340 519 A1

**Description**

TECHNICAL FIELD

The present invention relates to a terminal and a communication method in a radio communication system.

BACKGROUND ART

In New Radio (NR) (also referred to as "5G"), which is a successor system to Long Term Evolution (LTE), a technology that satisfies requirements such as a large-capacity system, a high-speed data transmission rate, low latency, simultaneous connection of a large number of terminals, low cost, and low power consumption has been discussed (see, Non-Patent Document 1, for example).

In NR Release 17, the use of a higher frequency band than that of the conventional release has been discussed (see,

Non-Patent Document 2, for example). For example, applicable numerologies including subcarrier spacings, channel bandwidths, and the like in a frequency band from 52.6 GHz to 71 GHz; physical layer designs; and failures assumed in actual wireless communications have been discussed.

RELATED-ART DOCUMENTS

NON-PATENT DOCUMENTS

Non-Patent Document 1: 3GPP TS 38.300 V16.5.0 (2021-03)
Non-Patent Document 2: 3GPP TS 38.306 V16.4.0 (2021-03)

SUMMARY OF THE INVENTION

PROBLEM TO BE SOLVED BY THE INVENTION

In a newly operated frequency band using higher frequencies than those of the conventional frequency band, a PRACH occasion used for physical random access channel (PRACH) transmission needs to be configured according to a larger subcarrier spacing.

The present invention has been made in view of the above-described points, and enables configuration of a random access channel adapted to a frequency band in a radio communication system.

MEANS TO SOLVE THE PROBLEM

According to the disclosed technology, a terminal includes a control unit that determines a physical random access channel (PRACH) slot and a random access radio network temporary identifier (RA-RNTI) that are to be used in a random access procedure; a transmitting unit that transmits a random access preamble in the determined PRACH slot; and a receiving unit that receives a random access response based on the determined RA-RNTI. The control unit sets a slot of a specific subcarrier spacing as a reference slot, and determines the PRACH slot to be used based on a number of PRACH slots included in the reference slot.

EFFECTS OF THE INVENTION

According to the disclosed technology, a random access channel adapted to a frequency band can be configured in a radio communication system.

BRIEF DESCRIPTION OF THE DRAWINGS

[FIG. 1] FIG. 1 is a drawing illustrating an example configuration of a radio communication system according to an embodiment of the present invention;
[FIG. 2] FIG. 2 is a drawing illustrating an example of a frequency range according to the embodiment of the present invention;

[FIG. 3] FIG. 3 is a drawing illustrating an example (1) of PRACH configurations according to the embodiment of the present invention;

[FIG. 4] FIG. 4 is a drawing illustrating an example (2) of PRACH configurations according to the embodiment of the present invention;

[FIG. 5] FIG. 5 is a drawing illustrating an example (3) of PRACH configurations according to the embodiment of the present invention;

[FIG. 6] FIG. 6 is a flowchart illustrating a random access procedure according to the embodiment of the present invention;

[FIG. 7] FIG. 7 is a drawing illustrating an example of a functional configuration of a base station according to the embodiment of the present invention;

[FIG. 8] FIG. 8 is a drawing illustrating an example of a functional configuration of a terminal according to the embodiment of the present invention; and

[FIG. 9] FIG. 9 is a drawing illustrating an example of a hardware configuration of each of the base station and the terminal according to the embodiment of the present invention.

MODE FOR CARRYING OUT THE INVENTION

In the following, embodiments of the present invention will be described with reference to the accompanying drawings. The embodiments described below are examples, and embodiments to which the present invention are applied are not limited to the following embodiments.

An existing technology is be used as appropriate when a radio communication system according to the embodiments of the present invention is operated. The existing technology is, for example, LTE; however, the existing technology is not limited to LTE. As used herein, the term "LTE" has a broader meaning including LTE-Advanced and schemes (such as NR) after LTE-Advanced, unless otherwise specified.

Further, in the embodiments of the present invention described below, terms used in the existing LTE, such as a synchronization signal (SS), a primary SS (PSS), a secondary SS (SSS), a physical broadcast channel (PBCH), a physical random access channel (PRACH), a physical downlink control channel (PDCCH), a physical downlink shared channel (PDSCH), a physical uplink control channel (PUCCH), and a physical uplink shared channel (PUSCH) are used. The above terms are used for the convenience of description, and signals, functions, and the like, which are similar to the above terms, may be referred to as different names. In NR, the above-described terms correspond to an NR-SS, an NR-PSS, an NR-SSS, an NR-PBCH, an NR-PRACH, and the like. Note that a signal used in NR is not necessarily referred to as "NR-".

Further, in the embodiments of the present invention, a duplex scheme may be a time division duplex (TDD) scheme, a frequency division duplex (FDD) scheme, or any other scheme (such as flexible duplex).

Further, in the embodiments of the present invention, the expression "a radio parameter or the like is configured" may mean that a predetermined value is preconfigured, or may mean that a radio parameter indicated by a base station 10 or a terminal 20 is configured.

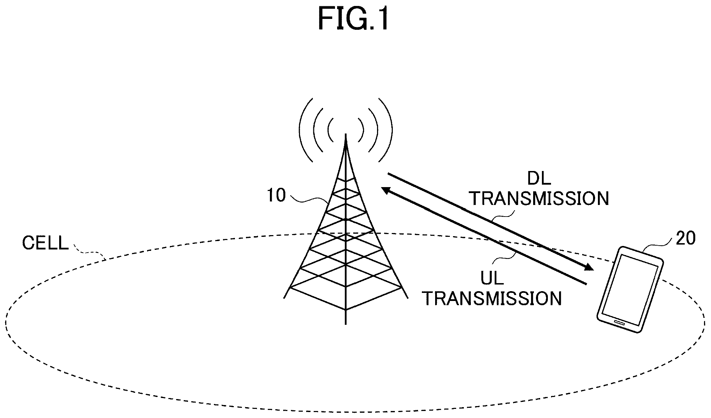

FIG. 1 is a drawing illustrating an example configuration of a radio communication system according to an embodiment of the present invention. As illustrated in FIG. 1, the radio communication system according to the embodiment of the present invention includes the base station 10 and the terminal 20. The one base station 10 and the one terminal 20 illustrated in FIG. 1 are merely examples, and a plurality of base stations 10 and a plurality of terminals 20 may be provided.

The base station 10 is a communication apparatus that provides one or more cells and wirelessly communicates with the terminal 20. Physical resources of a radio signal may be defined in the time domain and the frequency domain, the time domain may be defined by the number of orthogonal frequency division multiplexing (OFDM) symbols, and the frequency domain may be defined by the number of subcarriers or the number of resource blocks. The base station 10 transmits a synchronization signal and system information to the terminal 20. Examples of the synchronization signal include an NR-PSS and an NR-SSS. The system information is transmitted over an NR-PBCH, and is also referred to as broadcast information. The synchronization signal and the system information may be referred to as an SSB (SS/PBCH block). As illustrated in FIG. 1, the base station 10 transmits a control signal or data to the terminal 20 in downlink (DL), and receives a control signal or data from the terminal 20 in uplink (UL). Both the base station 10 and the terminal 20 can perform beamforming to transmit and receive signals. In addition, both the base station 10 and the terminal 20 can apply multiple-input multiple-output (MIMO) based communications to DL or UL. Both the base station 10 and the terminal 20 may perform communications via a secondary cell (SCell) and a primary cell (PCell) using carrier aggregation (CA). Further, the terminal 20 may perform communications via a primary cell of the base station 10 using dual connectivity (DC) and a primary secondary cell group cell (PSCell (Primary SCG Cell)) of another base station 10.

The terminal 20 is a communication apparatus having a radio communication function, such as a smartphone, a mobile phone, a tablet, a wearable terminal, or a machine-to-machine (M2M) communication module. As illustrated in FIG. 1, the terminal 20 uses various communication services provided by the radio communication system, by receiving a control signal or data from the base station 10 in DL and transmitting a control signal or data to the base station 10 in UL. In addition, the terminal 20 receives various reference signals transmitted from the base station 10, and measures channel quality based on results of the reception of the reference signals.

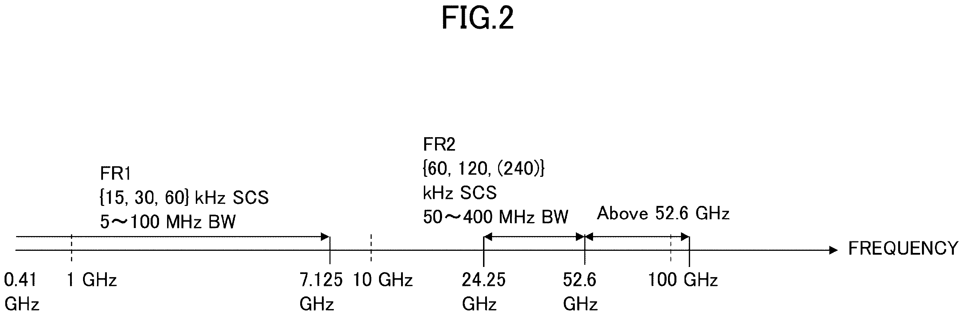

FIG. 2 is a drawing illustrating an example of a frequency range according to the embodiment of the present invention. In the NR technical specifications of 3GPP Release 15 and Release 16, for example, operation in a frequency band of 52.6 GHz and higher has been discussed. As illustrated in FIG. 2, a frequency range (FR) 1 for which the current operation is defined is a frequency band from 410 MHz to 7.125 GHz. In the FR1, a subcarrier spacing (SCS) is 15, 30, or 60 kHz, and the bandwidth is from 5 MHz to 100 MHz. An FR2 is a frequency band from 24.25 GHz to 52.6 GHz. In the FR2, an SCS is 60, 120, or 240 kHz, and the bandwidth is from 50 MHz to 400 MHz. For example, the newly operated frequency band may be assumed to be from 52.6 GHz to 71 GHz, may be assumed to be from 52.6 GHz to 114.25 GHz, or may include an unlicensed band or a non-license band.

In the frequency band from 52.6 GHz to 71 GHz, SCSs of 120 kHz, 480 kHz, and 960 kHz, and new bandwidths are supported.

In 120 kHz SCS, initial access and non-initial access are supported, and the PRACH sequence lengths L of 571 and 1151 are supported in addition to the PRACH sequence length L of 139. Further, for non-initial access use cases, the PRACH sequence length L of 139 may be supported in 480 kHz and/or 960 kHz SCS. Further, initial access may be supported in 480 kHz SCS and/or 960 kHz SCS.

As a PRACH configuration in 480 kHz and/or 960 kHz SCS, the minimum PRACH configuration period of 10 ms may be supported. For a RACH occasion (RO), 60 kHz or 120 kHz SCS may be configured as a reference slot.

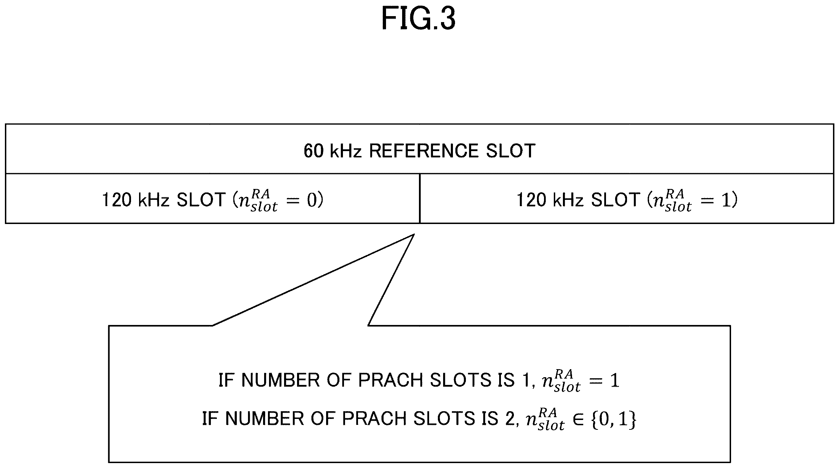

FIG. 3 is a drawing illustrating an example (1) of PRACH configurations according to the embodiment of the present invention. FIG. 3 is a drawing illustrating PRACH slot configurations in 120 kHz SCS in a case where 60 kHz SCS is set as a reference slot. As illustrated in FIG. 3, if the number of PRACH slots is 1, the second slot among two 120 kHz slots included in the 60 kHz reference slot is configured as a PRACH slot. As illustrated in FIG. 3, if the number of PRACH slots is 2, both of the two 120 kHz slots included in the 60 kHz reference slot are configured as PRACH slots.

Table 1 indicates an example of random access configurations.

[Table 1]

| PRACH Config. Index | Preamble format | $n_{SFN} \bmod x = y$ | | Slot number | Starting symbol | Number of PRACH slots within a 60 kHz slot | $N_t^{RA,slot}$, number of time-domain PRACH occasions within a PRACH slot | $N_{dur}^{RA}$, PRACH duration |
|---|---|---|---|---|---|---|---|---|
| | | $x$ | $y$ | | | | | |
| 0 | A1 | 16 | 1 | 4, 9, 14, 19, 24, 29, 34, 39 | 0 | 2 | 6 | 2 |
| 1 | A1 | 16 | 1 | 3, 7, 11, 15, 19, 23, 27, 31, 35, 39 | 0 | 1 | 6 | 2 |
| 2 | A1 | 8 | 1, 2 | 9, 19, 29, 39 | 0 | 2 | 6 | 2 |
| 3 | A1 | 8 | 1 | 4, 9, 14, 19, 24, 29, 34, 39 | 0 | 2 | 6 | 2 |
| 4 | A1 | 8 | 1 | 3, 7, 11, 15, 19, 23, 27, 31, 35, 39 | 0 | 1 | 6 | 2 |
| ... | ... | ... | ... | ... | ... | ... | ... | ... |

As indicated in Table 1, a preamble format, a system frame number and a slot number in which PRACH slots are located, a starting symbol, the number of PRACH slots within one 60 kHz slot, the number of time-domain PRACH occasions within a PRACH slot, and a PRACH duration are associated with a PRACH configuration index. As indicated in Table 1, 1 or 2 may be configured as the number of PRACH slots within one 60 kHz slot.

In the newly operated frequency band using higher frequencies, a PRACH occasion used for PRACH transmission needs to be configured according to a larger subcarrier spacing such as 480 kHz, 960 kHz, or the like.

For example, in an SCS of 480 kHz and/or 960 kHz, a method of determining PRACH slot(s) may be changed. Further, in a SCS of 480 kHz and/or 960, a method of calculating a random access radio network temporary identifier (RA-RNTI) may be changed.

PRACH slot(s) may be determined for PRACH transmission with 480 kHz SCS and/or 960 kHz SCS based on at least one of 1) to 3) below.

1) The number of PRACH slots within one 60 kHz SCS slot may be 1.
2) The number of PRACH slots within one 60 kHz SCS slot may be at most 2.
3) The number of PRACH slots within one 60 kHz SCS slot may be more than 2.

Table 2 indicates an example of random access configurations.

[Table 2]

| PRACH Config. Index | Preamble format | $n_{\mathrm{SFN}} \bmod x = y$ | | Slot number | Starting symbol | Number of PRACH slots within a 60 kHz slot | $N_t^{\mathrm{RA,slot}}$, number of time-domain PRACH occasions within a PRACH slot | $N_{\mathrm{dur}}^{\mathrm{RA}}$, PRACH duration |
| --- | --- | --- | --- | --- | --- | --- | --- | --- |
| | | $x$ | $y$ | | | | | |
| 0 | A1 | 16 | 1 | 4, 9, 14, 19, 24, 29, 34, 39 | 0 | 1 | 6 | 2 |
| 1 | A1 | 16 | 1 | 3, 7, 11, 15, 19, 23, 27, 31, 35, 39 | 0 | 1 | 6 | 2 |
| 2 | A1 | 8 | 1, 2 | 9, 19, 29, 39 | 0 | 1 | 6 | 2 |
| 3 | A1 | 8 | 1 | 4, 9, 14, 19, 24, 29, 34, 39 | 0 | 1 | 6 | 2 |
| 4 | A1 | 8 | 1 | 3, 7, 11, 15, 19, 23, 27, 31, 35, 39 | 0 | 1 | 6 | 2 |
| ... | ... | ... | ... | ... | ... | ... | ... | ... |

As indicated in Table 2, the number of PRACH slots within one 60 kHz SCS slot may be 1. The RO configurations and the RA-RNTI calculation method in Release 15 or Release 16 may be reused.

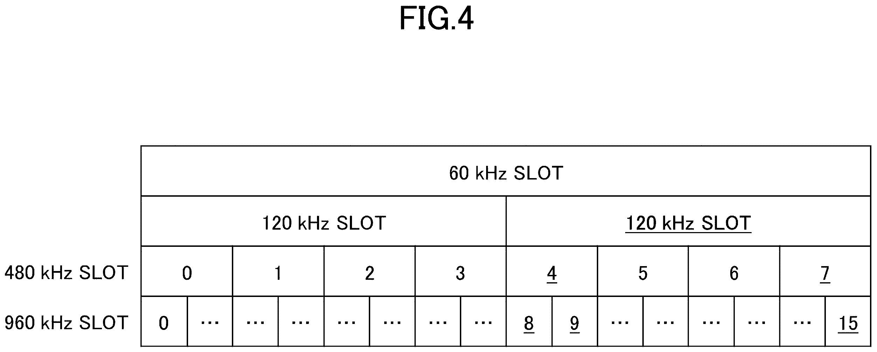

FIG. 4 is a drawing illustrating an example (2) of PRACH configurations. If the number of PRACH slots within one 60 kHz SCS slot is 1, a PRACH slot may be the last slot within the 60 kHz SCS slot. That is, as illustrated in FIG. 4, in the case of 480 kHz SCS slots, the slot #7 may be a PRACH slot, and in the case of 960 kHz SCS slots, the slot #15 may be a PRACH slot.

Further, for example, if the number of PRACH slots within one 60 kHz SCS slot is 1, a PRACH slot may be specified by the last 120 kHz SCS slot within the 60 kHz SCS slot. That is, as a reference slot, the 120 kHz SCS slot may be added to the 60 kHz SCS reference slot. For example, as illustrated in FIG. 4, in the case of the 480 kHz SCS slots, the slot #7 or the slot #4 may be a PRACH slot, and in the case of the slot #15, the slot #8, or the slot #9 may be a PRACH slot.

Further, for example, if the number of PRACH slots within one 60 kHz SCS slot is 1, the X-th slot within the 60 kHz SCS slot may be a PRACH slot. That is, as illustrated in FIG. 4, in the case of the 480 kHz SCS slots, any of the slots #0 to #7 may be configured as a PRACH slot, and in the case of the 960 kHz SCS slots, any of the slots #0 to #15 may be configured as a PRACH slot.

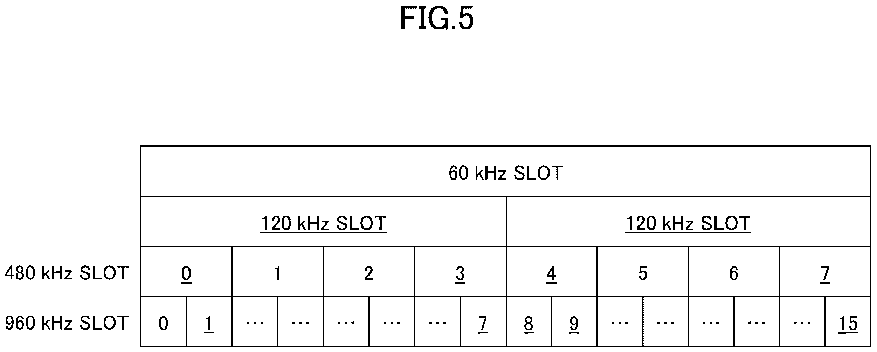

FIG. 5 is a drawing illustrating an example (3) of PRACH configurations. For example, if the number of PRACH slots within one 60 kHz SCS slot is at most 2, a PRACH slot may be specified by the last 120 kHz SCS slot within the 60 kHz SCS slot. That is, as a reference slot, the 120 kHz SCS slot may be added to the 60 kHz SCS reference slot. For example, as illustrated in FIG. 4, in the case of the 480 kHz SCS slots, the slot #7 and/or the slot #4 may be PRACH slot(s), and in the case of the 960 kHz SCS slots, the slot #15 and/or the slot #8 may be PRACH slot(s).

For example, if the number of PRACH slots within one 60 kHz SCS slot is at most 2, PRACH slot(s) may be included in 120 kHz SCS slot(s), which are reference slot(s) within the 60 kHz SCS reference slot. For example, if the number of PRACH slots within one 60 kHz SCS slot is 1, the slot #7 or the slot #4 may be a PRACH slot in the case of the 480 kHz SCS slots, and the slot #15, the slot #8, or the slot #9 may be a PRACH slot in the case of the 960 kHz SCS slots, as illustrated in FIG. 4. Further, for example, if the number of PRACH slots within one 60 kHz SCS slot is 1, the slot #3 or the slot #0 may be a PRACH slot in the case of the 480 kHz SCS slots, and the slot #7, the slot #0, or the slot #1 may be a PRACH slot in the case of the 960 kHz SCS slots, as illustrated in FIG. 4.

Further, for example, if the number of PRACH slots within one 60 kHz SCS slot is 2, the slot #3 and the slot #7 may be PRACH slots in the case of the 480 kHz SCS slots, and the slot #7 and the slot #1 may be PRACH slots in the case of the 960 kHz SCS slots, as illustrated in FIG. 4. Further, for example, if the number of PRACH slots within one 60 kHz SCS slot is 2, the slot #0 and the slot #4 may be PRACH slots in the case of the 480 kHz SCS slots, and the slot #0 and the slot #8 may be PRACH slots in the case of the 960 kHz SCS slots, as illustrated in FIG. 4.

Table 3 indicates an example of random access configurations.

[Table 3]

| PRACH Config. Index | Preamble format | $n_{\text{SFN}} \bmod x = y$ | | Slot number | Starting symbol | Number of PRACH slots within a 60 kHz slot | $N_t^{\text{RA,slot}}$, number of time-domain PRACH occasions within a PRACH slot | $N_{\text{dur}}^{\text{RA}}$, PRACH duration |
| --- | --- | --- | --- | --- | --- | --- | --- | --- |
| | | $x$ | $y$ | | | | | |
| 0 | A1 | 16 | 1 | 4, 9, 14, 19, 24, 29, 34, 39 | 0 | 4 | 6 | 2 |
| 1 | A1 | 16 | 1 | 3, 7, 11, 15, 19, 23, 27, 31, 35, 39 | 0 | 3 | 6 | 2 |
| 2 | A1 | 8 | 1, 2 | 9, 19, 29, 39 | 0 | 7 | 6 | 2 |
| 3 | A1 | 8 | 1 | 4, 9, 14, 19, 24, 29, 34, 39 | 0 | 2 | 6 | 2 |
| 4 | A1 | 8 | 1 | 3, 7, 11, 15, 19, 23, 27, 31, 35, 39 | 0 | 1 | 6 | 2 |
| ... | ... | ... | ... | ... | ... | ... | ... | ... |

As indicated in Table 3, the number of PRACH slots within one 60 kHz SCS slot may be more than 2. The number of PRACH slots within one 60 kHZ SCS slot indicated in Table 3 may be determined for each SCS. Further, a reference slot for determining a PRACH slot may be either a 60 kHz slot, a 120 kHz slot, a 240 kHz slot, a 480 kHz slot, or a 960 kHz slot.

For 480 kHz SCS and 960 kHz SCS, an RA-RNTI associated with the PRACH may be calculated by Equation 1.

[Equation 1]

$$RA\text{-}RNTI = \{\ 1 + s\_id + 14 \times t\_id + 14 \times \max(\ 80,\ N_{\text{slot}}^{\text{frame},\,\mu_{max}}\ ) \times f\_id$$

$$+ 14 \times \max(\ 80,\ N_{\text{slot}}^{\text{frame},\,\mu_{max}}\ ) \times 8 \times ul\_carrier\_id\ \}\ \bmod\ 2^{16}$$

For 480 kHz SCS and 960 kHz SCS, a MsgB-RNTI associated with the PRACH may be calculated by Equation 2.

[Equation 2]

$$MSGB\text{-}RNTI = \{\ 1 + s\_id + 14 \times t\_id + 14 \times \max(\ 80,\ N_{\text{slot}}^{\text{frame},\,\mu_{max}}\ ) \times f\_id$$

$$+ 14 \times \max(\ 80,\ N_{\text{slot}}^{\text{frame},\,\mu_{max}}\ ) \times 8 \times ul\_carrier\_id + 14 \times 80 \times 8 \times 2\ \}\ \bmod\ 2^{16}$$

In each of the Equations 1 and 2 above, "s_id" is the index of the first OFDM symbol of the PRACH occasion ($0 \le s\_id < 14$). "t_id" is the index of the first slot of the PRACH occasion in a system frame ($0 \le t\_id < 80$). "$N_{\text{slot}}^{\text{frame},\,\mu max}$" is the maximum number of slots in the system frame, and is, for example, 30 for 480 kHz SCS, and 640 for 960 kHz SCS. "f_id" is the index of the PRACH occasion in the frequency domain ($0 \le f\_id < 8$). "ul_carrier_id" is 0 for a normal uplink (NUL) carrier, and 1 for a supplementary uplink (SUL) carrier.

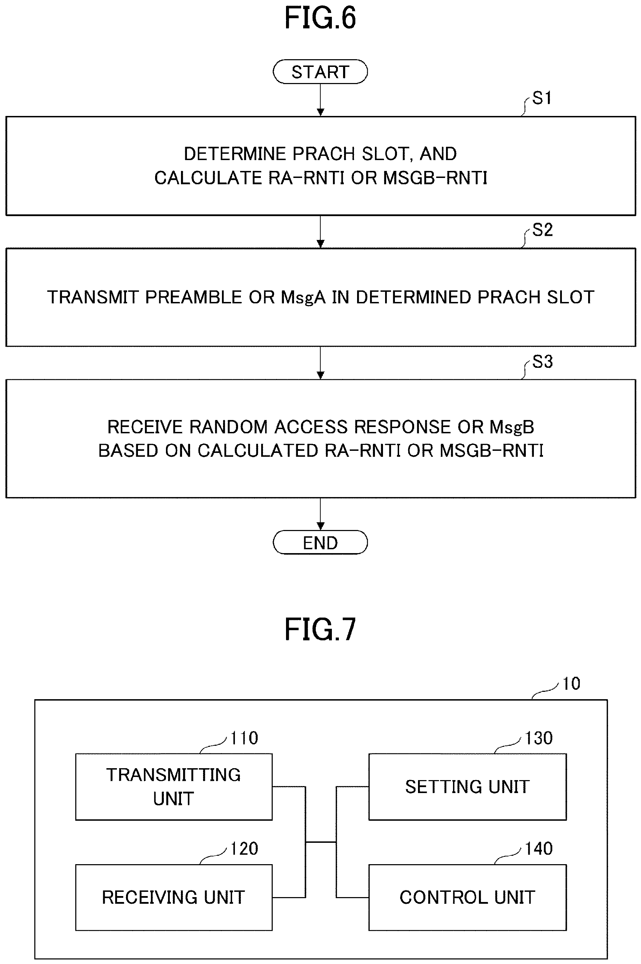

FIG. 6 is a flowchart illustrating a random access procedure according to the embodiment of the present invention. In step S1, the terminal 20 determines a PRACH slot, and calculates an RA-RNTI or a MSGB-RNTI. Next, in step S2, the terminal 20 transmits a preamble or a MsgA in the determined PRACH slot. Next, in step S3, the terminal 20 receives a random access response or a MsgB based on the calculated RA-RNTI or MSGB-RNTI.

According to the above-described embodiment, the terminal 20 can determine a PRACH occasion and an RA-RNTI or a MSGB-RNTI, transmit a preamble or a MsgA, and receive a random access response or a MsgB in a case where random access with 480 kHz SCS and 960 kHz SCS is supported.

That is, a random access channel adapted to a frequency band can be configured in a radio communication system.

(Device Configuration)

Next, examples of functional configurations of the base station 10 and the terminal 20 that perform the above-described processes and operations will be described. The base station 10 and the terminal 20 include functions to implement the above-described embodiments. However, each of the base station 10 and the terminal 20 may include some of the functions described in the embodiments.

<Base Station 10>

FIG. 7 is a drawing illustrating an example of a functional configuration of the base station 10 according to the embodiment of the present invention. As illustrated in FIG. 7, the base station 10 includes a transmitting unit 110, a receiving unit 120, a setting unit 130, and a control unit 140. The functional configuration illustrated in FIG. 7 is merely an example. As long as the operations according to the embodiments of the present invention can be performed, any functional classifications and names of functional units may be used.

The transmitting unit 110 includes a function to generate a signal and to wirelessly transmit the signal to the terminal 20. Further, the transmitting unit 110 transmits an inter-network node message to another network node. The receiving unit 120 includes a function to receive various types of signals transmitted from the terminal 20 and to obtain higher layer information from the received signals. In addition, the transmitting unit 110 includes a function to transmit an NR-PSS, an NR-SSS, an NR-PBCH, a DL/UL control signal, and the like, to the terminal 20. The receiving unit 120 receives an inter-network node message from another network node.

The setting unit 130 stores preconfigured configuration information and various types of configuration information to be transmitted to the terminal 20. Contents of the configuration information are, for example, information related to random access configurations and the like.

The control unit 140 performs control related to random access configurations as described in the embodiments. In addition, the control unit 140 performs scheduling. The functional units related to signal transmission in the control unit 140 may be included in the transmitting unit 110, and the functional units related to signal reception in the control unit 140 may be included in the receiving unit 120.

<Terminal 20>

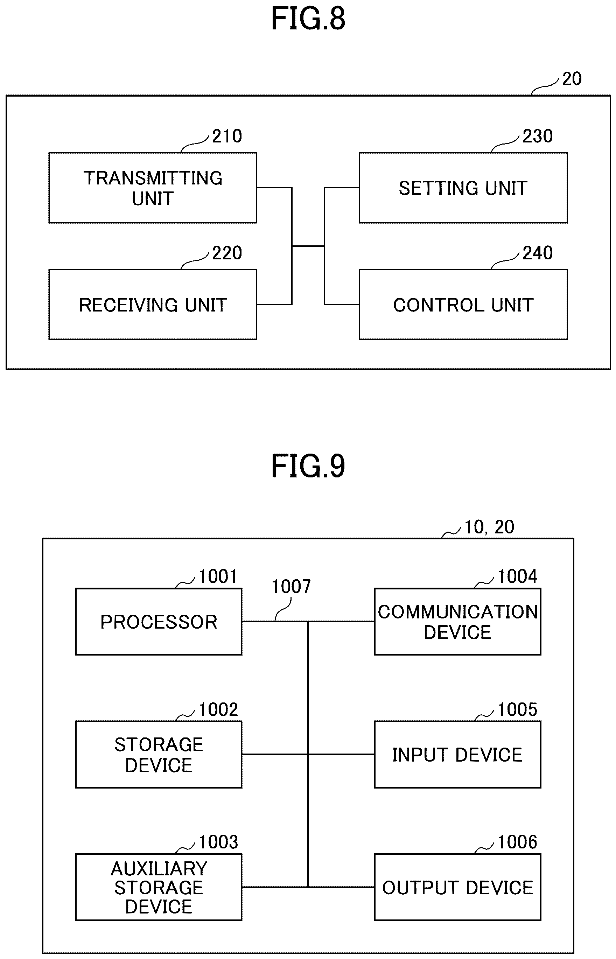

FIG. 8 is a drawing illustrating an example of a functional configuration of the terminal 20 according to the embodiment of the present invention. As illustrated in FIG. 8, the terminal 20 includes a transmitting unit 210, a receiving unit 220, a setting unit 230, and a control unit 240. The functional configuration illustrated in FIG. 8 is merely an example. As long as the operations according to the embodiments of the present invention can be performed, any functional classifications and names of functional units may be used.

The transmitting unit 210 generates a transmission signal from transmission data, and wirelessly transmits the transmission signal. The receiving unit 220 wirelessly receives various types of signals, and obtains higher layer signals from the received physical layer signals. In addition, the receiving unit 220 includes a function to receive an NR-PSS, an NR-SSS, an NR-PBCH, a DL/UL/SL control signal, and the like transmitted from the base station 10. Further, as D2D communication, the transmitting unit 210 transmits a physical sidelink control channel (PSCCH), a physical sidelink shared channel (PSSCH), a physical sidelink discovery channel (PSDCH), a physical sidelink broadcast channel (PSBCH), and the like to another terminal 20, and the receiving unit 220 receives a PSCCH, a PSSCH, a PSDCH, a PSBCH, and the like from the other terminal 20.

The setting unit 230 stores various types of setting information received from the base station 10 via the receiving unit 220. In addition, the setting unit 230 stores preconfigured configuration information. Contents of the configuration information are, for example, information related to random access configurations and the like.

The control unit 240 performs control related to random access configurations as described in the embodiments. The functional units related to signal transmission in the control unit 240 may be included in the transmitting unit 210, and the functional units related to signal reception in the control unit 240 may be included in the receiving unit 220.

(Hardware Configuration)

The block diagrams (FIG. 7 and FIG. 8) used in the above description of the embodiments illustrate functional unit blocks. These functional blocks (components) are implemented in any combination of hardware and/or software. Further, a method of implementing the functional blocks are not particularly limited. In other words, the functional blocks may be implemented in one physically and/or logically coupled device or in multiple devices where two or more physically and/or logically separated devices are connected directly and/or indirectly (for example, in wired and/or wireless manners). The functional blocks may be implemented by combining software with the above-described one or more devices.

The functions include judging, deciding, determining, computing, calculating, processing, deriving, examining, searching, ascertaining, receiving, transmitting, outputting, accessing, solving, selecting, choosing, establishing, comparing, assuming, expecting, deeming, broadcasting, notifying, communicating, forwarding, configuring, reconfiguring, allocating, mapping, and assigning; however, the functions are not limited thereto. For example, a functional block (component) for transmission is referred to as a transmitting unit or a transmitter. For all the functions, the implementation methods are not particularly limited as described above.

For example, the base station 10 and the terminal 20 according to an embodiment of the present disclosure may function as computers that perform a process of a radio communication method according to the present disclosure. FIG. 9 is a drawing illustrating an example of a hardware configuration of each of the base station 10 and the terminal 20 according to the embodiment of the present disclosure. Each of the above-described base station 10 and the terminal 20 may be physically configured as a computer including a processor 1001, a storage device 1002, an auxiliary storage device 1003, a communication device 1004, an input device 1005, an output device 1006, and a bus 1007.

In the following description, the term "apparatus" can be interchangeably read as a circuit, a device, a unit or the like. The hardware configuration of each of the base station 10 and the terminal 20 may be configured so as to include one or more of the illustrated devices or so as not to include some of the illustrated devices.

The functions of the base station 10 and the terminal 20 are implemented by causing hardware such as the processor 1001 and the storage device 1002 to read predetermined software (a program) so as to allow the processor 1001 to execute arithmetic operations, control communication by the communication device 1004, and control at least one of reading and writing of data from/into the storage device 1002 and the auxiliary storage device 1003.

The processor 1001 controls the entire computer by, for example, running an operating system. The processor 1001 may include a central processing unit (CPU) including an interface with a peripheral device, a control device, an arithmetic device, and a register. For example, each of the above-described control unit 140, the control unit 240, and the like may be implemented by the processor 1001.

Further, the processor 1001 reads out programs (program codes), software modules, and data from at least one of the auxiliary storage device 1003 and the communication device 1004 into the storage device 1002, and executes various processes in accordance therewith. Examples of the programs include a program causing the computer to execute at least a part of operations described in the above embodiments. For example, the control unit 140 of the base station 10 illustrated in FIG. 7 may be stored in the storage device 1002, and may be implemented by a control program executed by the processor 1001. In addition, for example, the control unit 240 of the terminal 20 illustrated in FIG. 8 may be stored in the storage device 1002, and may be implemented by a control program executed by the processor 1001. Although an example in which the above-described various types of processes are performed by the one processor 1001 has been described, the processes may be simultaneously or sequentially performed by two or more processors 1001. The processor 1001 may be implemented by one or more chips. Note that the programs may be transmitted from a network via an electric communication line.

The storage device 1002 is a computer-readable recording medium, and may include at least one of a read-only memory (ROM), an erasable programmable ROM (EPROM), an electrically erasable programmable ROM (EEPROM), and a random-access memory (RAM), for example. The storage device 1002 may be referred to as a register, a cache, or a main memory (a main storage device). The storage device 1002 can store, for example, programs (program codes) and software modules that can be executed to perform the communication method according to an embodiment of the present disclosure.

The auxiliary storage device 1003 is a computer-readable recording medium, and may include at least one of an optical disc such as a compact disc ROM (CD-ROM), a hard disk drive, a flexible disk, a magnetic optical disc (such as a compact disc, a digital versatile disc, and a Blu-ray (registered trademark) disk), a smart card, a flash memory (such as a card, a stick, and a key drive), a floppy (registered trademark) disk, and a magnetic strip. The above-described recording medium may be a database, a server, or any other appropriate medium including at least one of the storage device 1002 and/or the auxiliary storage device 1003.

The communication device 1004 is hardware (a transmitting/receiving device) that performs communication between computers via a wired and/or wireless network, and may be referred to as a network device, a network controller, a network card, or a communication module. The communication device 1004 may include a radio frequency switch, a duplexer, a filter, a frequency synthesizer, and the like, in order to implement at least one of frequency division duplex (FDD) and time division duplex (TDD). For example, a transmitting/receiving antenna, an amplifier unit, a transmitting/receiving unit, a transmission line interface, and the like may be implemented by the communication device 1004. The transmitting/receiving unit may be implemented such that a transmitting unit and a receiving unit are physically or logically separated.

The input device 1005 is an input device (such as a keyboard, a mouse, a microphone, a switch, a button, or a sensor) that receives inputs from the outside. The output device 1006 is an output device (such as a display, a speaker, or a LED ramp) that provides outputs to the outside. Note that the input device 1005 and the output device 1006 may be an integrated device (for example, a touch panel).

Further, the devices such as the processor 1001 and the storage device 1002 are connected with each other via the bus 1007 that communicates information. The bus 1007 may be configured with a single bus or may be configured with different buses between the devices.

Further, each of the base station 10 and the terminal 20 may be configured to include hardware such as a microprocessor, a digital signal processor (DSP), an application-specific integrated circuit (ASIC), a programmable logic device (PLD), and a field-programmable gate array (FPGA), and some or all of the functional blocks may be implemented by the hardware. For example, the processor 1001 may be implemented by at least one of these hardware devices.

(Summary of Embodiments)

As described above, according to an embodiment of the present invention, a terminal includes a control unit that determines a physical random access channel (PRACH) slot and a random access radio network temporary identifier (RA-RNTI) that are to be used in a random access procedure; a transmitting unit that transmits a random access preamble in the determined PRACH slot; and a receiving unit that receives a random access response based on the determined RA-RNTI. The control unit sets a slot of a specific subcarrier spacing as a reference slot, and determines the PRACH slot to be used based on a number of PRACH slots included in the reference slot.

With the above-described configuration, the terminal 20 can determine a PRACH occasion and an RA-RNTI or an MSGB-RNTI, transmit a preamble or a MsgA, and receive a random access response or a MsgB in a case where random access is supported for 480 kHz SCS and 960 kHz SCS. That is, a random access channel adapted to a frequency band can be configured in a radio communication system.

The number of the PRACH slots included in the reference slot may be 1. With this configuration, by controlling the number of resource blocks allocated to a PUCCH, the base station 10 and the terminal 20 can set the bandwidth of the PUCCH so as to ensure appropriate transmission power, while satisfying regulations related to the peak EIRP. The terminal 20 can determine a PRACH slot in a case where random access is supported for 480 kHz SCS and 960 kHz SCS.

The number of the PRACH slots included in the reference slot may be at most 2. With this configuration, by controlling the number of resource blocks allocated to a PUCCH, the base station 10 and the terminal 20 can set the bandwidth of the PUCCH so as to ensure appropriate transmission power, while satisfying regulations related to the peak EIRP. The terminal 20 can determine a PRACH slot in a case where random access is supported for 480 kHz SCS and 960 kHz SCS.

The number of the PRACH slots included in the reference slot may be more than 2. With this configuration, by controlling the number of resource blocks allocated to a PUCCH, the base station 10 and the terminal 20 can set the bandwidth of the PUCCH so as to ensure appropriate transmission power, while satisfying regulations related to the peak EIRP. The terminal 20 can determine a PRACH slot in a case where random access is supported for 480 kHz SCS and 960 kHz SCS.

The control unit may determine the RA-RNTI based on a number of slots in a subcarrier spacing applied to a PRACH slot in one system frame. With this configuration, by controlling the number of resource blocks allocated to a PUCCH, the base station 10 and the terminal 20 can set the bandwidth of the PUCCH that ensures appropriate transmission power, while satisfying regulations related to the peak EIRP. The terminal 20 can determine a RA-RNTI in a case where random access is supported for 480 kHz SCS and 960 kHz SCS.

Further, according to an embodiment of the present invention, a communication method performed by a terminal is provided. The communication method includes a control procedure for determining a physical random access channel (PRACH) slot and a random access radio network temporary identifier (RA-RNTI) that are to be used in a random access procedure; a transmitting procedure for transmitting a random access preamble in the determined PRACH slot; and a receiving procedure for receiving a random access response based on the determined RA-RNTI. The control unit sets a slot of a specific subcarrier spacing as a reference slot, and determines the PRACH slot to be used based on a number of PRACH slots included in the reference slot .

With the above-described configuration, the terminal 20 can determine a PRACH occasion and an RA-RNTI or an MSGB-RNTI, transmit a preamble or a MsgA, and receive a random access response or a MsgB in a case where random access is supported for 480 kHz SCS and 960 kHz SCS. That is, a random access channel adapted to a frequency band can be configured in a radio communication system.

(Supplements to Embodiments)

Although the embodiments of the present invention have been described above, the disclosed invention is not limited to the above-described embodiments, and persons skilled in the art will appreciate various modifications, revisions, alternatives, replacements, and the like. Specific examples of numerical values are used in the description in order to facilitate understanding of the present invention. However, these numerical values are merely examples, and any other appropriate values may be used, unless otherwise specified. Classifications of items in the above description are not essential to the present invention. Matters described in two or more items may be combined and used as necessary, and a matter described in one item may be applied to a matter described in another item (as long as there is no contradiction). A boundary between function units or between processing units in the functional block diagrams does not necessarily correspond to a boundary between physical components. The operations of a plurality of functional units may be physically executed by one component, or the operation of one functional unit may be physically executed by a plurality of components. The orders of the procedures described in the embodiments may be changed as long as there is no contradiction. For the convenience of description, the base station 10 and the terminal 20 have been described by using the functional block diagrams; however, such devices may be implemented by hardware, software, or combinations thereof. Each of software executed by the processor included in the base station 10 according to the embodiments of the present invention and software executed by the processor included in the terminal 20 according to the embodiments of the present invention may be stored in a random-access memory (RAM), a flash memory, a read-only memory (ROM), an EPROM, an EEPROM, a register, a hard disk drive (HDD), a removable disk, a CD-ROM, a database, a server, or any other appropriate storage medium.

Notification of information is not limited to the aspects/embodiments described in the present disclosure and may be performed in any other manner. For example, notification of information may be performed by physical layer signaling (for example, downlink control information (DCI) and uplink control information (UCI)), higher layer signaling (for example, radio resource control (RRC) signaling, medium access control (MAC) signaling, broadcast information (master information block (MIB), and system information block (SIB))), any other signal, or a combination thereof. Further, the RRC signaling may be referred to as an RRC message, and may be an RRC connection setup message, an RRC connection reconfiguration message, or the like.

The aspects/embodiments disclosed in the present disclosure may be applied to at least one of systems that utilize Long-Term Evolution (LTE), LTE-Advanced (LTE-A), SUPER 3G, IMT-Advanced, 4th generation mobile communication system (4G), 5th generation mobile communication system (5G), Future Radio Access (FRA), NR (New Radio), W-CDMA (registered trademark), GSM (registered trademark), CDMA 2000, Ultra Mobile Broadband (UMB), IEEE 802.11 (Wi-Fi (registered trademark)), IEEE 802.16 (WiMAX (registered trademark)), IEEE 802.20, UWB (ultra-wideband), Bluetooth (registered trademark), and other appropriate systems; and next-generation systems enhanced therefrom. In addition, a plurality of systems may be combined (for example, at least one of LTE and LTE-A may be combined with 5G) and applied.

The orders of procedures, sequences, and flowcharts of the aspects/embodiments described in the present specification may be changed as long as there is no contradiction. For example, the method described in the present specification presents various elements of steps in an exemplary order, and is not limited to a presented specific order.

In the present specification, a specific operation described as being performed by the base station 10 may be performed by its upper node in some cases. In a network including one or more network nodes including the base station 10, it is apparent that various operations performed for communication with the terminal 20 may be performed by at least one of the base station 10 and network nodes (including, but not limited to a mobility management entity (MME) and a serving-gateway (S-GW)) other than the base station 10. In the above, a case in which there is one network node other than the base station 10 has been exemplified; however, the other node may be a combination of a plurality of other network nodes (for example, an MME and an S-GW).

Information, a signal, or the like may be output from a higher layer (or a lower layer) to a lower layer (or a higher layer). Information, signals, or the like may be input/output via a plurality of network nodes. The information, the signal, or the like may be input and output via a plurality of network nodes.

Input/output information and the like may be stored in a specific location (for example, a memory), or may be managed by using a management table. The input/output information and the like may be overwritten, updated, or appended. The output information and the like may be deleted. The input information and the like may be transmitted to another apparatus.

According to the present disclosure, the determination may be made by a value (0 or 1) represented by one bit, may be made by a Boolean value (Boolean: true or false), or may be made by comparison of numerical values (comparison with a predetermined value, for example).

Software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, and the like, regardless of whether the software is referred to as software, firmware, middleware, microcode, hardware description language, or any other name.

Furthermore, software, instructions, information, and the like may be transmitted and received via a transmission medium. For example, when software is transmitted from a website, a server, or any other remote source, by using at least one of a wired technology (such as a coaxial cable, a fiber optic cable, a twisted pair, or a digital subscriber line (DSL)) and a wireless technology (such as infrared or microwaves), the at least one of wired technology and the wireless technology is included within the definition of the transmission medium.

Information, signals, and the like described in the present disclosure may be represented by using any of various different techniques. For example, data, instructions, commands, information, signals, bits, symbols, chips, and the like that may be referred to throughout the above description may be represented by voltages, currents, electromagnetic waves, magnetic fields, magnetic particles, optical fields, photons, or any combination thereof.

Terms described in the present disclosure and terms necessary to understand the present disclosure may be replaced with terms having the same or similar meanings. For example, at least one of a channel and a symbol may be a signal (signaling). In addition, a signal may be a message. Further, a component carrier (CC) may be referred to as a carrier frequency, a cell, a frequency carrier, or the like.

The terms "system" and "network" used in the present disclosure are used interchangeably.

Further, information, parameters, and the like described in the present disclosure may be represented by using absolute values, may be represented by using relative values from predetermined values, or may be represented by using other corresponding information. For example, a radio resource may be specified by an index.

Names used for the above-described parameters are not limited in any respect. Further, there may be a case where formulas using these parameters may be different from those explicitly disclosed in the present disclosure. Various channels (such as a PUCCH and a PDCCH) and information elements can be identified by any suitable names, and thus, names assigned to these various channels and information elements are not limited in any respect.

In the present disclosure, the terms "base station (BS)", "radio base station", "base station apparatus", "fixed Station", "NodeB", "eNodeB (eNB)", "gNodeB (gNB)", "access point", "transmission point", "reception point", "transmission/reception point", "cell", "sector", "cell group", "carrier", "component carrier", and the like may be used interchangeably. The base station may be referred to as a macro cell, a small cell, a femtocell, a picocell, or any other term.

The base station can accommodate one or more (for example, three) cells. If the base station accommodates a plurality of cells, the entire coverage area of the base station can be partitioned into a plurality of small areas, and each of the small areas can provide a communication service through a base station subsystem (for example, a small indoor base station (a remote radio head (RRH)). The term "cell" or "sector" refers to a part of or the entirety of the coverage area of at least one of the base station and the base station subsystem providing a communication service in the coverage.

In the present disclosure, the terms "mobile station (MS)", "user terminal", "user equipment (UE)", "terminal", and the like may be used interchangeably.

A mobile station may be referred to by those skilled in the art as a subscriber station, a mobile unit, a subscriber unit, a wireless unit, a remote unit, a mobile device, a wireless device, a radio communication device, a remote device, a mobile subscriber station, an access terminal, a mobile terminal, a wireless terminal, a remote terminal, a handset, a user agent, a mobile client, a client, or some other suitable terms.

At least one of the base station and the mobile station may be referred to as a transmitting device, a receiving device, a communication device, or the like. At least one of the base station and the mobile station may be a device mounted on a mobile body, the moving body itself, or the like. The moving body may be a vehicle (such as a car or an airplane, for example), a moving body that moves unmanned (such as a drone or an autonomous vehicle, for example), or a robot (manned or unmanned). At least one of the base station and the mobile station also includes a device that does not necessarily move during communication operations. For example, at least one of the base station and the mobile station may be an Internet of Things (IoT) device such as a sensor.

Further, the base station in the present disclosure may be replaced with a user terminal. For example, each aspect/embodiment of the present disclosure may be applied to a configuration such that communication between the base station and the user terminal is replaced with communication between a plurality of terminals 20 (which may be referred to as device-to-device (D2D) communication, vehicle-to-everything (V2X) communication, or the like). In this case, the functions of the above-described base station 10 may be included in the terminal 20. Additionally, the terms such as "uplink" and "downlink" may be replaced with terms corresponding to inter-terminal communication (for example, "side"). For example, an uplink channel, a downlink channel may be replaced with a side channel.

Similarly, the user terminal in the present disclosure may be replaced with the base station. In this case, the functions included in the above-described user terminal may be included in the base station.

As used herein, the terms "determining" and "deciding" may include various types of operations. For example, the terms "determining" and "deciding" may include "determining" and "deciding" that judging, calculating, computing, processing, deriving, investigating, looking up, searching, or inquiring (e.g., looking up a table, a database, or any other data structure), or ascertaining is considered to be performed. Further, the terms "determining" and "deciding" may include "determining" and "deciding" that receiving (e.g., receiving information), transmitting (e.g., transmitting information), inputting, outputting, or accessing (e.g., accessing data in a memory) is considered to be performed. Furthermore, the terms "determining" and "deciding" may include "determining" and "deciding" that resolving, selecting, choosing, establishing, comparing, or the like is considered to be performed. That is, the terms "determining" and "deciding" may include deeming that some operation is "determined" and "decided". Further, "determining (deciding)" may be replaced with "assuming", "expecting", "considering", or the like.

The terms "connected", "coupled", or any variation thereof mean any direct or indirect connection or coupling between two or more elements, and may include the presence of one or more intermediate elements between the two elements "connected" or "coupled" to each other. The coupling or connection between the elements may be physical, logical, or a combination thereof. For example, "connected" may be replaced with "access". As used herein, two elements can be considered to be mutually "connected" or "coupled" by using at least one of one or more wires, cables, and printed electrical connections, and, as some non-limiting and non-inclusive examples, by using electromagnetic energy such as electromagnetic energy with a wavelength in a radio frequency range, a microwave range, and an optical range (both visible and invisible).

A reference signal may be abbreviated as RS, and may be referred to as a pilot according to applicable standards.

As used herein, the term "based on" does not mean "based only on", unless otherwise specified. In other words, the term "based on" means both "based only on" and "based at least on".

Any reference to elements that use terms such as "first" and "second" used in the present disclosure does not generally limit the amount or order of these elements. These terms can be used in the present disclosure as a convenient way to distinguish between two or more elements. Accordingly, the reference to the first and second elements does not mean that only two elements can be employed, or does not mean that the first element must precede the second element in some manner.

The term "means" used in the configuration of each apparatus described above may be replaced with "unit", "circuit", "device", or the like.

As long as the terms "include", "including", and any variation thereof are used in the present disclosure, these terms are intended to be inclusive similar to the term "comprising". Further, the term "or" used in the present disclosure is intended not to be "exclusive or".

A radio frame may include one or more frames in a time domain. In the time domain, the one or more frames may be referred to as subframes. Each of the subframes may further include one or more slots in the time domain. Further, a subframe may be a fixed time length (e.g., 1 ms) that does not depend on a numerology.

The numerology may be a communication parameter to be applied to at least one of transmission or reception of a signal or a channel. The numerology may represent, for example, at least one of subcarrier spacing (SCS), a bandwidth, a symbol length, a cyclic prefix length, a transmission time interval (TTI), a symbol number per TTI, a radio frame configuration, a specific filtering process performed by a transmitter/receiver in the frequency domain, and a specific windowing process performed by a transmitter/receiver in the time domain.

A slot may be configured with one or more symbols (such as orthogonal frequency division multiplexing (OFDM) symbols or single carrier frequency division multiple access (SC-FDMA) symbols) in a time domain. A slot may be a unit of time based on the numerology.

A slot may include a plurality of mini-slots. Each of the mini-slots may be configured with one or more symbols in the time domain. A mini-slot may be referred to as a sub-slot. A mini-slot may be configured with fewer symbols than a slot. A PDSCH (or PUSCH) transmitted in a unit of time that is greater than a mini-slot may be referred to as a "PDSCH (or PUSCH) mapping type A". A PDSCH (or PUSCH) transmitted using a mini-slot may be referred to as "PDSCH (or PUSCH) mapping type B".

A radio frame, a subframe, a slot, a mini-slot, and a symbol each represent a time unit for transmitting a signal. The radio frame, the subframe, the slot, the mini-slot, and the symbol may be referred to by respective different names.

For example, one subframe may be referred to as a transmission time interval (TTI), a plurality of consecutive subframes may be referred to as a TTI, or one slot or one mini-slot may be referred to as a TTI. That is, at least one of a subframe and a TTI may be a subframe (1 ms) in the existing LTE, may be a time interval shorter than 1 ms (e.g., 1 to 13 symbols), or a time interval longer than 1 ms. Note that the unit representing a TTI may be referred to as a slot, a mini-slot, or the like, instead of a subframe.

For example, a TTI refers to the minimum time unit for scheduling in radio communication. For example, in the LTE system, the base station performs scheduling for allocating radio resources (such as a frequency bandwidth and transmission power that can be used in each terminal 20) in units of TTIs to each terminal 20. Note that the definition of "TTI" is not limited to the above.

A TTI may be a transmission time unit, such as a channel-coded data packet (transport block), a code block, or a code word, or may be a processing unit such as scheduling or link adaptation. When a TTI is provided, a time interval (e.g., a symbol number) to which a transport block, a code block, or a code word is actually mapped may be shorter than the TTI.

Note that, when one slot or one mini-slot is referred to as a TTI, one or more TTIs (i.e., one or more slots or one or more mini-slots) may be the minimum time unit for scheduling. Additionally, the number of slots (the number of mini-slots) forming the minimum time unit for scheduling may be controlled.

A TTI with a time length of 1 ms may be referred to as an ordinary TTI (a TTI in LTE Rel. 8-12), a normal TTI, a long TTI, an ordinary subframe, a normal subframe, a long subframe, a slot, or the like. A TTI that is shorter than a normal TTI may be referred to as a shortened TTI, a short TTI, a partial TTI (or a fractional TTI), a shortened subframe, a short subframe, a mini-slot, a sub-slot, a slot, or the like.

Note that a long TTI (e.g., a normal TTI, a subframe, or the like) may be replaced with a TTI with a time length exceeding 1 ms, and a short TTI (e.g., a shortened TTI or the like) may be replaced with a TTI with a TTI length that is less than the TTI length of the long TTI and greater than or equal to 1 ms.

A resource block (RB) is a resource allocation unit in the time domain and the frequency domain, and may include one or more consecutive subcarriers in the frequency domain. The number of subcarriers included in an RB may be the same, irrespective of the numerology, and may be 12, for example. The number of subcarriers included in an RB may be determined based on the numerology.

Further, the time domain of an RB may include one or more symbols, and may have a length of one slot, one mini-slot, one subframe, or one TTI. Each of one TTI, one subframe, or the like may be configured with one or more resource blocks.

Note that one or more RBs may be referred to as physical resource blocks (PRBs), subcarrier groups (SCGs), resource element groups (REGs), PRB pairs, RB pairs, or the like.

Further, a resource block may be configured with one or more resource elements (REs). For example, one RE may be a radio resource area of one subcarrier and one symbol.

A bandwidth part (BWP) (which may also be referred to as a partial bandwidth, for example) may represent, in a certain carrier, a subset of consecutive common resource blocks (common RBs) for a certain numerology. Here, the common RB may be specified by an index of an RB when a common reference point of the carrier is used as reference. A PRB may be defined in a BWP, and may be numbered in the BWP.

A BWP may include a BWP for UL (UL BWP) and a BWP for DL (DL BWP). For the UE, one or more BWPs may be configured in one carrier.

At least one of configured BWPs may be active, and the UE is not required to assume that a predetermined signal/channel is transmitted/received outside the active BWP(s). Note that a "cell", a "carrier", or the like in the present disclosure may be replaced with a "BWP".

The structures of the above-described radio frame, subframe, slot, mini-slot, symbol, and the like are merely examples. For example, the following configurations can be variously changed: the number of subframes included in a radio frame; the number of slots per subframe or per radio frame; the number of mini-slots included in a slot; the number of symbols and RBs included in a slot or mini-slot; the number of subcarriers included in an RB; and the number of symbols, the symbol length, the cyclic prefix (CP) length, and the like within a TTI.

In the present disclosure, for example, if articles such as "a", "an", and "the" in English are added by a translation, the present disclosure may include a case in which nouns following the articles may be plural.

In the present disclosure, the phrase "A and B are different" may mean that "A and B are different from each other". Note that the phrase "A and B are different" may also mean "each of A and B is different from C." The terms such as "separated" and "coupled" may also be interpreted similarly.

The aspects/embodiments described in the present disclosure may be used alone, may be used in combination, or may be switched in accordance with execution. Furthermore, notification of predetermined information (e.g., notification of "being X") is not limited to notification that is made explicitly, and the notification may be made implicitly (by not sending notification of the predetermined information, for example).

Although the present disclosure has been described in detail, it will be readily apparent to those skilled in the art that the present disclosure is not limited to the embodiments described in the present disclosure. The present disclosure can be implemented as modified and changed aspects without departing from the gist and scope of the present disclosure as set forth in claims. Accordingly, the description of the present disclosure is for illustrative purposes and does not have any restrictive meaning to the present disclosure.

DESCRIPTION OF THE REFERENCE NUMERALS

10 base station
110 transmitting unit
120 receiving unit
130 setting unit
140 control unit
20 terminal
210 transmitting unit
220 receiving unit
230 setting unit
240 control unit
1001 processor
1002 storage device
1003 auxiliary storage device
1004 communication device
1005 input device
1006 output device

**Claims**

1. A terminal comprising:

   a control unit that determines a physical random access channel (PRACH) slot and a random access radio network temporary identifier (RA-RNTI) that are to be used in a random access procedure;
   a transmitting unit that transmits a random access preamble in the determined PRACH slot; and
   a receiving unit that receives a random access response based on the determined RA-RNTI,
   wherein the control unit sets a slot of a specific subcarrier spacing as a reference slot, and determines the PRACH slot to be used based on a number of PRACH slots included in the reference slot.

2. The terminal according to claim 1, wherein the number of the PRACH slots included in the reference slot is 1.

3. The terminal according to claim 1, wherein the number of the PRACH slots included in the reference slot is at most 2.

4. The terminal according to claim 1, wherein the number of the PRACH slots included in the reference slot is more than 2.

5. The terminal according to claim 1, wherein the control unit determines the RA-RNTI based on a number of slots in a subcarrier spacing applied to a PRACH slot in one system frame.

6. A communication method performed by a terminal, the communication method comprising:

a control procedure for determining a physical random access channel (PRACH) slot and a random access radio network temporary identifier (RA-RNTI) that are to be used in a random access procedure;
a transmitting procedure for transmitting a random access preamble in the determined PRACH slot; and
a receiving procedure for receiving a random access response based on the determined RA-RNTI,
wherein the control unit sets a slot of a specific subcarrier spacing as a reference slot, and determines the PRACH slot to be used based on a number of PRACH slots included in the reference slot.

# FIG.1

EP 4 340 519 A1

# FIG.2

FR1
{15, 30, 60} kHz SCS
5~100 MHz BW

FR2
{60, 120, (240)}
kHz SCS
50~400 MHz BW

Above 52.6 GHz

FREQUENCY

0.41
GHz

1 GHz

7.125
GHz

10 GHz

24.25
GHz

52.6
GHz

100 GHz

EP 4 340 519 A1

# FIG.3

| 60 kHz REFERENCE SLOT | |
|---|---|
| 120 kHz SLOT ($n_{slot}^{RA} = 0$) | 120 kHz SLOT ($n_{slot}^{RA} = 1$) |

IF NUMBER OF PRACH SLOTS IS 1, $n_{slot}^{RA} = 1$

IF NUMBER OF PRACH SLOTS IS 2, $n_{slot}^{RA} \in \{0, 1\}$

EP 4 340 519 A1

# FIG.4

| 60 kHz SLOT | | | | | | | | | | | | | | | |
|---|---|---|---|---|---|---|---|---|---|---|---|---|---|---|---|
| 120 kHz SLOT | | | | | | | | 120 kHz SLOT | | | | | | | |
| **480 kHz SLOT** | 0 | | 1 | | 2 | | 3 | | 4 | | 5 | | 6 | | 7 |
| **960 kHz SLOT** | 0 | ... | ... | ... | ... | ... | ... | ... | 8 | 9 | ... | ... | ... | ... | ... | 15 |

# FIG.5

| 60 kHz SLOT | | | | | | | | | | | | | |
|---|---|---|---|---|---|---|---|---|---|---|---|---|---|
| 120 kHz SLOT | | | | | | | 120 kHz SLOT | | | | | | |

| 480 kHz SLOT | 0 | | 1 | | 2 | | 3 | 4 | | 5 | | 6 | | 7 |
|---|---|---|---|---|---|---|---|---|---|---|---|---|---|---|
| 960 kHz SLOT | 0 | 1 | ⋯ | ⋯ | ⋯ | ⋯ | ⋯ | 7 | 8 | 9 | ⋯ | ⋯ | ⋯ | ⋯ | ⋯ | 15 |

# FIG.6

( START )

S1

DETERMINE PRACH SLOT, AND
CALCULATE RA-RNTI OR MSGB-RNTI

S2

TRANSMIT PREAMBLE OR MsgA IN DETERMINED PRACH SLOT

S3

RECEIVE RANDOM ACCESS RESPONSE OR MsgB
BASED ON CALCULATED RA-RNTI OR MSGB-RNTI

( END )

# FIG.7

10

| 110 | 130 |
| --- | --- |
| TRANSMITTING UNIT | SETTING UNIT |
| 120 | 140 |
| RECEIVING UNIT | CONTROL UNIT |

# FIG.8

# FIG.9

## INTERNATIONAL SEARCH REPORT

| International application No. |
| --- |
| **PCT/JP2021/017778** |

**A. CLASSIFICATION OF SUBJECT MATTER**

*H04W 74/08*(2009.01)i
FI: H04W74/08

According to International Patent Classification (IPC) or to both national classification and IPC

**B. FIELDS SEARCHED**

Minimum documentation searched (classification system followed by classification symbols)

H04W4/00-99/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | LG ELECTRONICS. Initial access aspects to support NR above 52.6 GHz [online]. 3GPP TSG RAN WG1 #104b-e R1-2103339. 12 April 2021<br>section 3 | 1-6 |
| A | INTEL CORPORATION. Discussion on initial access aspects for extending NR up to 71 GHz [online]. 3GPP TSG RAN WG1 #104b-e R1-2103021. 20 April 2021<br>sections 2.3-2.4 | 1-6 |
| A | ERICSSON. Initial Access Aspects [online]. 3GPP TSG RAN WG1 #104b-e R1-2102788. 20 April 2021<br>section 2.2 | 1-6 |

☐ Further documents are listed in the continuation of Box C.     ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br><br>**01 December 2021** | Date of mailing of the international search report<br><br>**14 December 2021** |
| Name and mailing address of the ISA/JP<br><br>**Japan Patent Office (ISA/JP)**<br>**3-4-3 Kasumigaseki, Chiyoda-ku, Tokyo 100-8915**<br>**Japan** | Authorized officer<br><br><br><br>Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *3GPP TS 38.300 V16.5.0,* March 2021
- *3GPP TS 38.306 V16.4.0,* March 2021